# EUROPÄISCHE PATENTANMELDUNG

(11) **EP 0 763 670 A2**
(43) Veröffentlichungstag der Anmeldung: **19.03.1997**
(21) Anmeldenummer: 96113877.3
(22) Anmeldetag: 30.08.1996
(51) Int. Cl.: F16F 7/09

(54) **Reibungsdämpfer zur Bewegungsdämpfung in mechanischen Systemen**

(30) Priorität: 02.09.1995 DE 29514124 U
(71) Anmelder: BASF AKTIENGESELLSCHAFT, 67056 Ludwigshafen (DE)
(72) Erfinder: Hofmann, Dieter, 49401 Damme (DE); Weiss, Claus, 49459 Lembruch (DE)

(57) **Zusammenfassung**

Zur Bewegungsdämpfung in mechanischen Systemen mit Reibungspartnern, zwischen denen Relativgeschwindigkeiten auftreten, wird ein Reibungsdämpfer vorgeschlagen, der im wesentlichen aus einem axial geführten Kolben oder kolbenähnlichen Element (3), einem Reibungselement (4), aus mikrozelligen bis kompakten Elastomeren, sowie einem Rohrteil (1) besteht, wobei dem Reibungselement (4) ein Aktivierungselement (5) zugeordnet ist, das sich am Kolben (3) oder Rohrteil (1) abstützt, und wobei diese Elemente (4, 5) gegenüber der Bewegungsrichtung der Reibungspartner geneigte Druckflächen besitzen, die zueinander, in Wirkkontakt stehen.

## Beschreibung

Reibungsdämpfer im Sinne des Oberbegriffes sind Einrichtungen, welche Bewegungsenergie durch Reibung vernichten und damit, da die Reibkraft der Bewegungsrichtung des zu dämpfenden Teiles entgegengesetzt ist, den Bewegungsablauf dämpfen. Bewegungsdämpfung ist für die verschiedensten Bewegungsäbläufe von nicht geringer Bedeutung. Es sei hier nur an die bekannten Stoßdämpfer in Kraftfahrzeugen erinnert, aber auch an die konstruktiv wesentlich einfacheren Reibungsdämpfer z.B. in Waschmaschinen, in welchen hochelastische Reibelemente aus mikrozelligen Polyurethanenelastomeren genutzt und seit vielen Jahren erfolgreich eingesetzt werden.

In ihrem heutigen Entwicklungsstand sind hydraulische Stoßdämpfer sehr exakt auf ihre Aufgaben einstellbar. Die einstellbare, dämpfende Wirkung der hydraulischen Dämpfer ist je nach Aufgabe richtungs-, geschwindigkeits- und/oder wegabhängig.

Reibungsdämpfer bisheriger Bauart sind dagegen ausschließlich von den wirkenden Normalkräften und der Oberflächenbeschaffenheit der Reibpartner abhängig. D.h., sie sind unabhängig von Bewegungsrichtung und -geschwindigkeit der Reibpartner. Ihre bewegungsdämpfende Wirkung beruht allein auf der Reibung zwischen den Reibpartnern.

Bei Reibungssystemen mit Elastomeren hat es sich gezeigt, daß sich die Elastomere unter Last sehr gut ihren Gegenflächen anpassen. Sie folgen dabei auch feinen Oberflächenstrukturen des Reibpartners, verknüpfen und verhaken sich in den Gegenflächen und bewirken so eine höhere Reibung, als vergleichbare Reibpartner aus Metall. Dabei weisen insbesondere Polyurethanelastomere, in Abhängigkeit von der Ausbildung der Reibpartner, keinen oder im Sinne der Anwendung vernachlässigbar geringen Abrieb auf.

Das Ziel der Erfindung ist es, einen Reibungsdämpfer mit guter Anpassungsfähigkeit seiner Reibpartner zu schaffen, der auf unterschiedliche Betriebsbedingungen leicht eingestellt werden kann.

Zur Lösung dieser Aufgabe werden die Maßnahmen nach dem Kennzeichen des Anspruches 1 vorgeschlagen.

Der Reibungsdämpfer nach der Erfindung ist fertigungstechnisch besonders einfach. Wegen der erreichten Selbsttätigkeit der Konstruktion benötigt keines der Bauteile eine enge Tolerierung.

Bei dem Reibungsdämpfer bewegt sich in einem Rohrteil (1) ein scheibenförmiger Kolben (3). Dieser Kolben (3) trägt an seinem freien Ende ein Aktivierungselement (5), dessen geneigte Mantelfläche unter einem Neigungswinkel liegt und einen Kegelstumpf bildet. Auf dem Kegelstumpf sitzt ein Reibelement (4). In entspannter Lage ist der Außendurchmesser dieses Reibelements marginal größer als der Innendurchmesser des Rohrteiles (1). Das Reibelement (4) ist auf seiner Innenseite kegelförmig ausgeschnitten und wird mittels einer Vorspannfeder (6) und einer Druckscheibe (7) mit Einstellschraube (8) gegen den Kegelstumpf des Aktivierungselementes (5) gedrückt. Über den Kegelwinkel entsteht eine Radialkomponente der Vorspannkraft, welche das Reibelement (4) gegen das Rohrteil (1) drückt. Bei entsprechender Axialbewegung des Kolbens mit Reibsatz bewirkt die Radialkraft Reibung am Rohrteil (1). Die Reibung verzögert die jeweilige Bewegung, wirkt also dämpfend.

Wird der Kolben (3) aufwärts bewegt, so strebt die Reibkraft an, das Reibelement (4) in seiner Lage festzuhalten. Daher versucht das Reibelement (4) sich vom Kegelstumpf (5) zu lösen. Infolgedessen wird die vom Kegelstumpf bewirkte Radialkraft kleiner und dementsprechend, weil die Radialkraft die Normalkraft für die Reibung ist, auch die Reibkraft. Einstellschraube (8), Druckscheibe (7) und Vorspannfeder (6) verhindern ein Lösen des Reibelements (4) vom Kolben (3). Es wird unter allen Bedingungen sicher mitgenommen. Die Reibungsdämpfung ist in diesem "Leerhub" ausschließlich auf die Durchmesserüberschneidung (Rohrinnendurchmesser zu Reibungslement (4)-Außendurchmesser) zurückzuführen.

Nach Umkehr der Bewegungsrichtung, also Bewegung des Kolbens (3) nach unten, drückt zunächst die Vorspannfeder (6) des Reibungselements (5) auf den Kegelstumpf des Aktivierungselementes (4). Durch den Kegelwinkel überträgt das Reibungselement (4) die bereits beschriebene Radialkraft auf die Rohrinnenwand des Rohrteiles (1). Dadurch erhöht sich die bewegungsverzögernde Reibkraft. Federvorspannung und Reibkraft addieren sich in diesem Fall, verstärken also die Anpressung auf den Kegelstumpf. Die erhöhte Kraft bringt über den Aktivierungswinkel des Kegelstumpfes eine zusätzliche radiale Anpressung des Reibungselementes (4) gegen die Rohrinnenwand des Rohrteiles (1).

In diesem Dämpfungshub verstärkt also die entstehende, der Bewegung entgegengerichtete axiale Reibkraft die Anpressung des Reibungselementes (4) auf den Kegelstumpf des Aktivierungselementes (5) und über dessen Winkel die Radialkomponente gegen die Rohrinnenwand usw.. Der Prozeß der automatischen Reibkraftverstärkung ist dann beendet, wenn die nach innen und nach außen gerichteten Radialkräfte gleich groß sind, d.h., wenn die aus Konstruktion und Materialdaten resultierende, nach innen gerichtete radiale Rückstellkraft des Reibungselementes (4) gleich der nach außen gerichteten durch den Kegelstumpf des Aktivierungselementes (5) bewirkten Radialkraft ist.

Die Aktivierungswinkel der Paarung Kegelstumpf - Reibungselement und die Lage der Winkel zueinander wirken sich unterschiedlich aus und werden auf die gewählte Materialart des Reibungselementes (4) abgestimmt. Kleine Winkel (zur Achsmitte des Dämpfungselementes) bewirken z.B. bei Einsatz von Elastomeren eine stärkere Verkeilung des Reibungselementes (4) im Raum zwischen Kegelstumpf und der Rohrwand des Rohrteiles (1), also eine größere Reibwirkung auf die Rohrwand. Große Winkel bewirken in manchen Fällen ein schnelleres Ansprechen der Dämpfung im Dämpfungshub und schnelleres Lösen der Dämpfung im Gegenhub.

Darüber hinaus können die Winkel des Aktivierungselements (5) und des dazugehörigen Reibungselementes (4) aber auch unterschiedlich ausgeführt sein, um spezielle Auswirkungen auf die Reibungswirkung zu erzielen. Das ist z.B. dann erreicht, wenn die Oberfläche des Kegelstumpfes ballig (konvex) ausgeführt wird.

Ist bei Verwendung von Elastomeren der Neigungswinkel des Reibungselementes (4) kleiner als der Winkel des Aktivierungselementes (5), so wird die Reibwirkung im Dämpfungshub aufgrund der Verkeilung des Reibungselementes (4) zwischen Aktiverungselement (5) und der Rohrwand (1) weiter verstärkt. Vergrößert man dagegen den Neigungswinkel des Reibelements gegenüber dem Winkel des Aktivierungselementes, ist die Reibwirkung verringert und verzögert. Dieser Effekt ergibt sich aus dem Kräftegleichgewicht zwischen den Radialkräften, welche ihrerseits aus den Axialkräften (Reibkraft, Federkraft der Vorspannfeder (6)) folgern. Gleichzeitig sind die aufgebrachten und durch die Form des Reibungselementes sich ergebenden Radialkräfte einander entgegengerichtet. Die bewegungsdämpfende Reibkraft wird dann nicht weiter ansteigen, wenn die Radialkräfte einen Gleichgewichtszustand erreichen. Dieser Gleichgewichtszustand kennzeichnet für den jeweiligen Bewegungszustand die Grenze der maximal erreichbaren Reibung.

Ab Erreichen des Kräftegleichgewichts bleibt die Reibung und damit die Dämpfungswirkung konstant. Elastizitätsmodul und Aktivierungswinkel sind konstruktiv entsprechend der gewünschten Reibkraftverstärkung aufeinander abzustimmen. Allgemein gilt, daß mit höherem Elastizitätsmodul des Reibungselementes (4) ein größerer Aktivierungswinkel zu wählen ist (also im beschriebenen Fall flacher Kegelwinkel am Aktivierungselement (5)).

Auch die Materialart des Reibungselementes (4) hat großen Einfluß auf das Dämpfungssystem. Ein mikrozellulares Polyurethanelement verhält sich anders, als eine ähnlich einer Spannhülse geschlitzte Metallbuchse.

Die Oberflächenbeschaffenheit der Reibungspartner, die Anwesenheit von Schmiermitteln und die Relativgeschwindigkeit zwischen den Reibungspartnern, wirkt sich deutlich auf die Dämpfungsleistung aus. Diese Bedingungen müssen daher ebenfalls bei der Festlegung des Aktivierungswinkels und der Wahl der Reibungspartner mit berücksichtigt werden. Dabei ist zu beachten, daß der erfindungsgemäß vorgeschlagene Reibungsdämpfer richtungs- und geschwindigkeitsabhängig ist.

Das erfindungsgemäße Dämpfungssystem kann verschiedenartig ausgeführt werden. Zwei beispielhafte Ausführungsformen sind in der Zeichnung schematisch dargestellt und nachfolgend erläutert.

Es zeigt
- Figur 1: einen Längsschnitt durch einen Reibungsdämpfer, bei welchem der Reibsatz auf einem Kolben mitgeführt, also bewegt wird und
- Figur 2: einen Längsschnitt durch einen Reibungsdämpfer, bei welchem der Reibsatz in einem Rohr fest installiert, also unbeweglich ist.

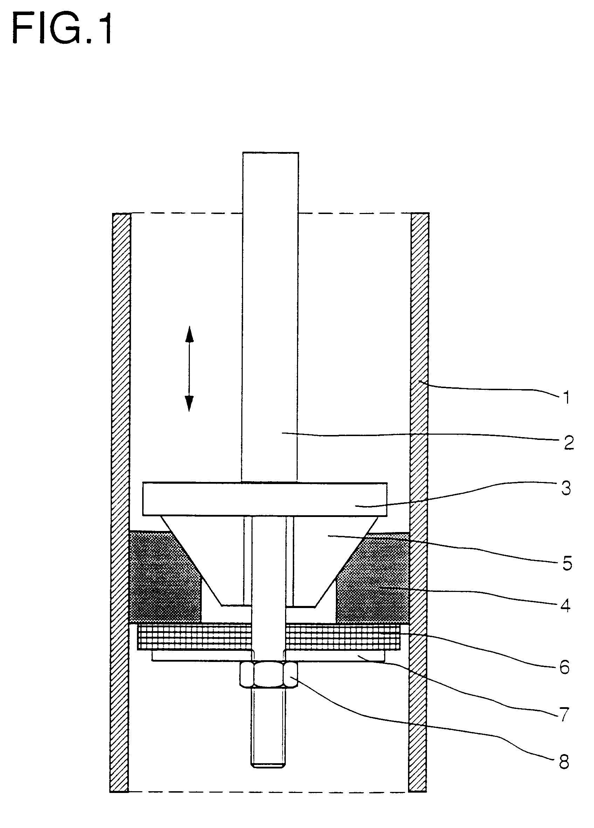

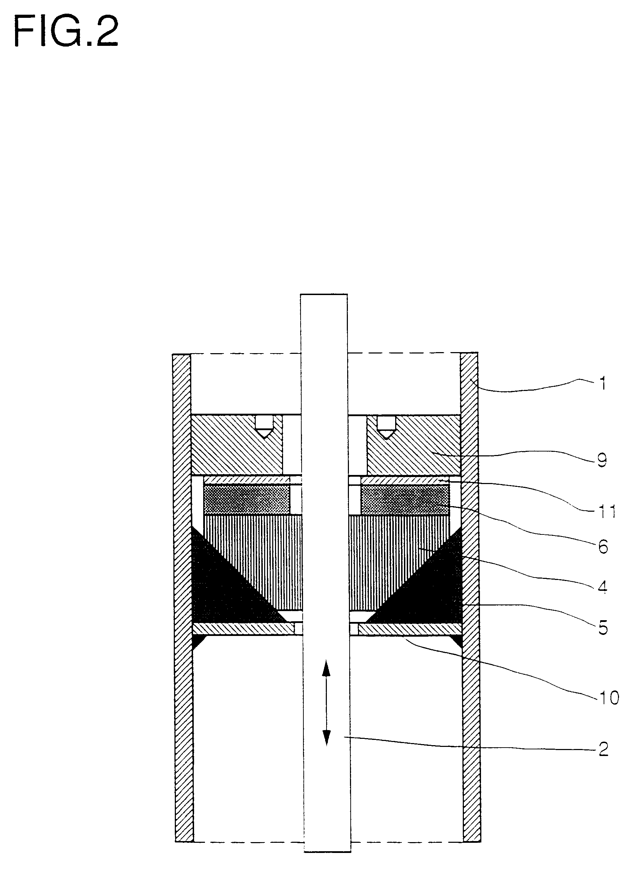

Die bewegungsdämpfende Reibkraft wird bei dem Ausführungsbeispiel gemäß Figur 1 an der äußeren Mantelfläche des bewegten Reibelements und bei dem Ausführungsbeispiel gemäß Figur 2 an der inneren Mantelfläche des feststehenden Reibelementes erzeugt.

In der Darstellung nach Figur 1 ist das Reibungselement (4) zwischen dem Kolben (3) und der feststehenden Rohrwand des Rohrteiles (1) angeordnet.

Durch entsprechende konstruktive Ausbildung des Aktivierungselementes (5) hinsichtlich seines Aktivierungswinkels und einem darum angeordneten kegelstumpfartig ausgeschnittenen ringförmigen Reibungselementes (4) ergibt sich ein feststehender Reibsatz gegen die bewegte Kolbenstange (2) (Figur 2). Darüber hinaus können mittels folgerichtiger Ausbildung der Elemente ebenflächig geformte, runde, rechteckige und quadratische sowie auch beliebig anders gestaltete Systeme mit räumlich unterschiedlichen Dicken des Reibungselementes (4) zur Anwendung kommen.

Außerdem kann die Vorspannung des Reibungslementes (4) über die Einstellschraube (8) bzw. Einstellmutter (9) und die Vorspannfeder (6) variiert werden. Eine höhere Vorspannung des Reibungselementes (4) bewirkt eine stärker einsetzende Dämpfung im Dämpfungshub, allerdings auch eine höhere Dämpfung im Gegenhub. Die maximal erreichbare Dämpfung bleibt dabei unverändert.

Mit verhältnismäßig einfachen Mitteln kann darüber hinaus das Aktivierungselement (5) so gestaltet werden, daß der das Reibungselement (4) aktivierende Winkel kontinuierlich veränderbar ist. Damit können durch die Veränderung der Vorspannung unterschiedliche Neigungswinkel aktiviert werden, so daß sich die in Abhängigkeit von Reibkraft und Bewegungsgeschwindigkeit einstellende Dämpfung, aber auch die maximal mögliche Dämpfung des Reibsystems insbesondere bei Verwendung von elastomeren Reibungselementen individuell einstellbar gestaltet werden.

Verglichen mit hydraulischen Stoßdämpfern, ihren eng tolerierten Passungen, den hochgenauen Drosseleinrichtungen, den notwendigen Oberflächenqualitäten, sowie den unerläßlichen Dichtungen und Dichtungssitzen, bietet dieser einstellbare bewegungsrichtungsunabhängige Reibungsstoßdämpfer eine unkomplizierte und kostengünstige Alternative in vielen Anwendungsfällen. So kann das System wirksam die Dämpfung in modern gefederten Fahrradgabeln übernehmen, es kann Türschließsysteme weiter verbessern und in vielen industriellen Anwendungen eine einfache Alternative zu den jetzt eingesetzten teueren Systemen bieten.

## Patentansprüche

1. Reibungdämpfer zur Bewegungsdämpfung in mechanischen Systemen mit Reibungspartnern, zwischen denen Relativgeschwindigkeiten auftreten, im wesentlichen bestehend aus einem axial geführten Kolben oder kolbenähnlichen Element (3), einem Reibungselement (4), aus mikrozelligen bis kompakten Elastomeren, sowie einem Rohrteil (1), dadurch gekennzeichnet, daß dem Reibungselement (4) ein Aktivierungselement (5) zugeordnet ist, das sich am Kolben (3) oder Rohrteil (1) abstützt, und daß diese Elemente (4, 5) gegenüber der Bewegungsrichtung der Reibungspartner geneigte Druckflächen besitzen, die zueinander, in Wirkkontakt stehen.

2. Reibungsdämpfer nach Anspruch 1, dadurch gekennzeichnet, daß das Aktivierungselement (5) einen kreis- oder polygonförmigen Querschnitt aufweist und seine Druckfläche(n) zu der oder den Druckfläche(n) des Reibungselementes (4) in Teilbereichen zumindest annähernd komplementär ausgebildet ist bzw. sind.

3. Reibungsdämpfer nach den Ansprüchen 1 und 2, dadurch gekennzeichnet, daß die Druckfläche(n) des Aktivierungselementes (5) unter einem vorgesehenen Neigungswinkel bogenförmig (konvex) ausgebildet ist.

4. Reibungsdämpfer nach den Ansprüchen 1 bis 3, dadurch gekennzeichnet, daß das Aktivierungselement (5) Bestandteil des Kolbens (3) ist.

5. Reibungsdämpfer nach den Ansprüchen 1 bis 4, dadurch gekennzeichnet, daß sich das Aktivierungselement (5) im Rohrteil (1) auf einem Widerlager (10) abstützt und daß das Reibungselement (4) die Kolbenstange (2) form- und kraftschlüssig umschließt.

6. Reibungsdämpfer nach den Ansprüchen 1 bis 5, dadurch gekennzeichnet, daß dem Reibungselement (4) eine axial wirkende Vorspannfeder (6) zugeordnet ist und daß zum Einstellen der Vorspannung eine Druckscheibe (7, 11) mit Einstellschraube (8) an der Kolbenstange (2) oder eine Einstellmutter (9) im Rohrteil (1) vorhanden ist.

7. Reibungsdämpfer nach Anspruch 6, dadurch gekennzeichnet, daß die Vorspannfeder (6) aus zelligem bis mikrozelligem Polyurethanelastomer besteht.
